# EUROPEAN PATENT APPLICATION

(11) **EP 3 656 653 A1**
(43) Date of publication of application: **27.05.2020**
(21) Application number: 18805576.8
(22) Date of filing: 22.05.2018
(51) Int. Cl.: B62K 9/00, B62M 3/00, B62M 17/00

(54) **BICYCLE AND PRODUCTION METHOD FOR BICYCLE**

(30) Priority: 23.05.2017 JP 2017101321
(71) Applicant: Vitamin I Factory Co., Ltd, Tokyo 150-0001 (JP)
(72) Inventor: MATKOWICZ, Mario, Newport Victoria 3015 (AU); GOLIATH, Matthew Ernest, Melbourne Victoria 3205 (AU)
(74) Representative: Plougmann Vingtoft a/s
(86) International application number: PCT/JP2018/019591
(87) International publication number: WO 2018/216676

(57) **Abstract**

A bicycle 1 includes a front wheel 11 and a rear wheel 12. The bicycle 1 includes: a shaft 16 having a first gear 21 provided between the front wheel 11 and the rear wheel 12, a second gear provided to the rear wheel 12, a third gear 161 that engages with the first gear 21, and a fourth gear 162 that engages with the second gear; and a connection part 151 to which a gear crank 17 for rotating the first gear 21 is connected in an attachable/detachable manner and which transmits the drive force of the gear crank 17 to the first gear 21.

## Description

### TECHNICAL FIELD

The present invention relates to a bicycle suitable for practicing bicycle riding and a method for assembling a bicycle.

### BACKGROUND ART

Training bicycles are known in the art having a unit including a pedal, a crank, and a chain wheel that can be detached in order to practice riding a bicycle. A beginner of a bicycle can develop a sense of balance by riding the training bicycle without a pedal unit while kicking the ground with his/her feet (See, Patent Document 1).

### PRIOR ART

### PATENT DOCUMENT

Patent Document 1: Japanese Unexamined Patent Application Publication No. 2013-147199

### SUMMARY OF INVENTION

### PROBLEMS TO BE SOLVED BY THE INVENTION

In conventional training bicycles, it has been necessary to detach the unit including the pedal, the crank, and the chain wheel in order to remove the pedal. There is a problem that the unit cannot be easily detached because the unit including the pedal, the crank, and the chain wheel is too heavy to support easily with one hand and the chain wheel has projections for fitting a chain.

The present invention focuses on these points, and an object of the present invention is to provide a bicycle with a pedal which can be easily detached.

### MEANS FOR SOLVING THE PROBLEMS

A bicycle of the first aspect of the present invention has a front wheel and a rear wheel. This bicycle comprises a first gear provided between the front wheel and the rear wheel, a second gear provided on the rear wheel, a shaft having a third gear meshing with the first gear and a fourth gear meshing with the second gear, and a coupling part for detachably coupling a gear crank for rotating the first gear and transmitting a driving force of the gear crank to the first gear.

The coupling part has at least one of a convex portion that engages with a concave portion formed on the gear crank and a concave portion that engages with a convex portion formed on the gear crank.

The coupling part and the first gear may have holes through which a rod-shaped member extends from the gear crank.

A coupling mechanism for coupling a regulating member for regulating the position of a second gear crank in a left and right direction may be formed on a distal end side from the position where the second gear crank is attached to the rod-shaped member on a second side of the rod-shaped member opposite to a first side, on which a first gear crank is coupled to the coupling part, out of the right side and the left side of the bicycle.

The bicycle may further comprise a support part that surrounds an outer peripheral surface of the rod-shaped member between the second gear crank and the first gear, and supports the rod-shaped member.

The coupling part may detachably fix a cover that covers the coupling part in a state where the gear crank is not coupled.

The shaft may be formed of a flexible member extending from the position of the third gear to the position of the fourth gear. The shaft has, for example, a plurality of integral linear members.

The bicycle may further comprise a frame provided between the front wheel and the rear wheel, and the shaft may have a region extending along the frame. The shaft may have a region extending along a curved portion of the frame.

A bicycle of the second aspect of the present invention has a front wheel and a rear wheel. This bicycle comprises a first gear provided between the front wheel and the rear wheel, a second gear provided on the rear wheel, a shaft having a third gear meshing with the first gear and a fourth gear meshing with the second gear, a gear crank for rotating the first gear, and a pedal detachably coupled to the gear crank.

In the bicycle of the first aspect and the second aspect, the first gear may be detachably fixed to the body of the bicycle, the second gear may be detachably fixed to the rear wheel, the shaft may be separated from the body by separating the first gear from the body and separating the second gear from the rear wheel.

The above-mentioned bicycle may further comprises a coupling member that couples the rear wheel and the second gear, and the second gear may be fixed to the rear wheel with the coupling member when the coupling member penetrates through the second gear and the tip of the coupling member contacts the rear wheel, and the second gear may be separated from the rear wheel when the coupling member does not penetrate through the second gear.

A production method for a bicycle of the third aspect of the present invention is a method for producing a bicycle described above. The production method comprises the steps of preparing a bicycle described above, preparing a first gear crank and a second gear crank, coupling the first gear crank to a coupling part by inserting a rod-shaped member extending from the first gear crank into a hole formed in the coupling part, attaching the second gear crank to the distal end side of the rod-shaped member, and coupling a regulating member for regulating the position of the second gear crank in a left and right direction to the distal end side, which is from the position where the second gear crank is attached to the rod-shaped member to the distal end.

### EFFECT OF THE INVENTION

According to the present invention, it is possible to easily detach a pedal of a bicycle.

### BRIEF DESCRIPTION OF THE DRAWINGS

FIG. 1 shows an appearance of a bicycle according to the first embodiment.
FIG. 2 shows the appearance of the bicycle according to the first embodiment.
FIG. 3 is a diagram for explaining a driving force transmission structure of the bicycle.
FIG. 4 shows a peripheral portion of an accommodation part viewed from the right front side of the bicycle.
FIG. 5 is a perspective view of an internal structure of the accommodation part when the peripheral portion of the accommodation part is viewed from above the bicycle.
FIG. 6 is a perspective view of the vicinity of a first gear and a third gear when the peripheral portion of the accommodation part is viewed from the right side of the bicycle.
FIG. 7 shows the periphery of a second gear and a fourth gear provided on a rear wheel.
FIG. 8 is a diagram for explaining a structure of the accommodation part.
FIG. 9 is a diagram for explaining a structure for fixing a gear crank by a regulating member.
FIG. 10 shows a bicycle of a variation of the first embodiment.
FIG. 11 is an appearance of a bicycle according to the second embodiment.
FIG. 12 is a diagram for explaining an outline of a bicycle according to the third embodiment.
FIG. 13 shows the vicinity of a rotary shaft of the rear wheel.
FIG. 14 is a cross-sectional view of the vicinity of the rotary shaft of the rear wheel viewed from the rear side of the bicycle.
FIG. 15 is a diagram for explaining a method for detaching the accommodation part.

### DETAILED DESCRIPTION OF THE INVENTION

### <The First Embodiment

### [An appearance of a bicycle 1]

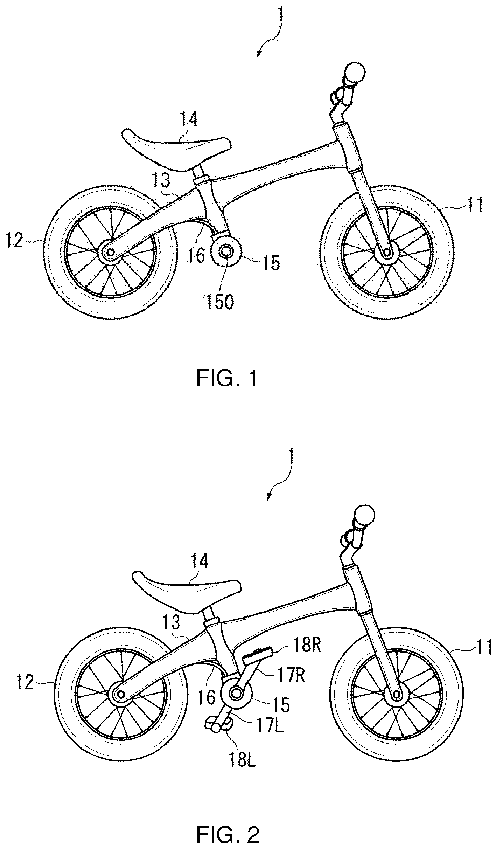

FIGS. 1 and 2 show an appearance of a bicycle 1 according to the first embodiment. FIG. 1 shows the bicycle 1 with a gear crank 17 and a pedal 18 detached, and FIG. 2 shows the bicycle 1 with the gear crank 17 and the pedal 18 attached. The bicycle 1 is a two-wheeled bicycle, in which the gear crank 17 and a pedal 18 are detachably constructed, and is a bicycle suitable for practicing bicycle riding.

A user (e.g., a child) who uses the bicycle 1 to practice riding the bicycle can develop a sense of balance by riding the bicycle in a state shown in FIG. 1 while kicking the ground with his/her feet. After the user acquires the sense of balance, the user attaches the gear crank 17 and the pedal 18 to the bicycle 1, and practices pedaling the pedal 18. In this way, the user can ride the bicycle in a short period of time.

In a state shown in FIG. 1, the bicycle 1 includes a front wheel 11, a rear wheel 12, a frame 13, a saddle 14, an accommodation part 15, and a shaft 16. A cover 150 for covering a coupling part (a coupling part 151 to be mentioned later) for attaching the gear crank 17 is detachably provided in the accommodation part 15. In a state shown in FIG. 2, the bicycle 1 is in a state in which the gear crank 17 (17L, 17R) are coupled instead of the cover 150. In this state, the pedal 18 (18L, 18R) is coupled to the gear crank 17 (17L, 17R), and the user can drive the bicycle 1 by pedaling the pedal 18.

The shaft 16 transmits a driving force generated when the gear crank 17 is rotated by the user pedaling the pedal 18 to the rear wheel 12 in a state where the gear crank 17 and the pedal 18 are coupled to the accommodation part 15. The shaft 16 is formed of a flexible member, and is provided in a curved shape along a curved portion of the frame 13 between the accommodation part 15 and the rear wheel 12.

### [A driving force transmission structure of the bicycle 1]

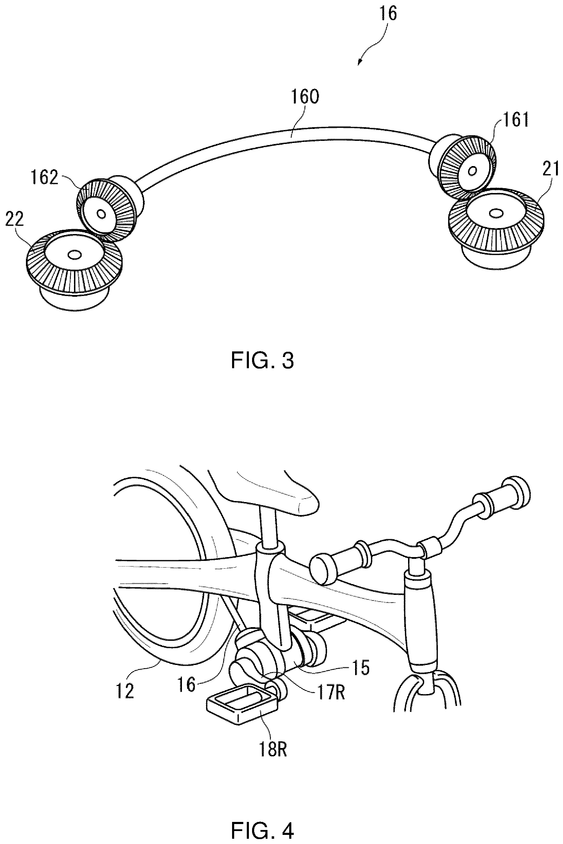

FIG. 3 is a diagram for explaining a driving force transmission structure of the bicycle 1. In the bicycle 1, the driving force generated by the user pedaling the pedal 18 is transmitted to the rear wheel 12 by a first gear 21 provided in the accommodation part 15, the shaft 16, and a second gear 22 provided in the rear wheel 12.

As shown in FIG. 3, the shaft 16 includes a shaft body 160 as well as a third gear 161 and a fourth gear 162 provided on respective ends of the shaft body 160. The shaft body 160 is formed of a flexible member extending from the position of the third gear 161 to the position of the fourth gear 162. The third gear 161 is a gear that meshes with the first gear 21 provided at a position between the front wheel 11 and the rear wheel 12 (for example, at a position below the saddle 14). The fourth gear 162 is a gear that meshes with the second gear 22 provided on the rear wheel 12.

The first gear 21 and the third gear 161, and the second gear 22 and the fourth gear 162, each constitute bevel gears. The rotation of the first gear 21 rotates the third gear 161, and the rotation of the fourth gear 162 rotates the second gear 22.

Since the shaft 16 includes the third gear 161 and the fourth gear 162 which form a part of the bevel gears, the first gear 21 rotates with the rotation of the gear crank 17, and the third gear 161 rotates with the rotation of the first gear 21 to rotate the shaft 16 in the radial direction. The rotation of the shaft 16 in the radial direction rotates the fourth gear 162, and the rotation of the fourth gear 162 rotates the second gear 22 to rotate the rear wheel 12.

The flexible member included in the shaft 16 consists of, for example, a plurality of integrated linear members. Since the shaft 16 is formed of a flexible member, the shaft 16 can be disposed along the frame 13 even when a portion of the frame 13 is formed in a curved shape.

Therefore, the shaft 16 can be configured to have a region extending along the frame 13 as shown in FIGS. 1 and 2, and can be difficult to be seen from the outside, thereby improving the appearance of the bicycle 1. Moreover, since most of the region of the shaft 16 is located inside the frame 13, it is difficult for the user to touch the rotating shaft 16, thereby improving safety.

### [A configuration in the vicinity of the first gear 21 and the second gear 22]

FIG. 4 shows a peripheral portion of the accommodation part 15 viewed from the right front side of the bicycle 1. As shown in FIG. 4, the shaft 16 extends from the rear of the accommodation part 15 toward the rear wheel 12.

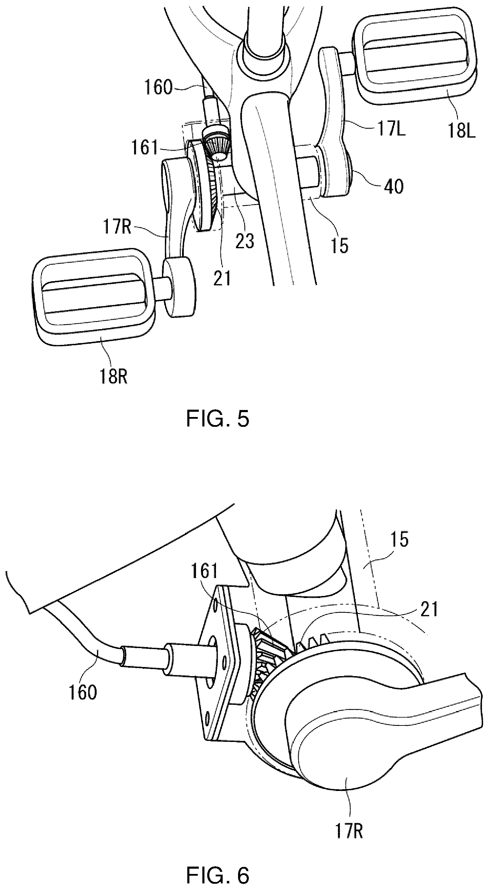

FIG. 5 is a perspective view of an internal structure of the accommodation part 15 when the peripheral portion of the accommodation part 15 is viewed from above the bicycle 1. As shown in FIG. 5, the first gear 21, the third gear 161, and a support part 23 are provided inside the accommodation part 15. FIG. 6 is a perspective view of the vicinity of the first gear 21 and the third gear 161 when the peripheral portion of the accommodation part 15 is viewed from the right side of the bicycle 1.

The first gear 21 rotates with the rotation of the gear crank 17R in a state where the gear crank 17R, serving as the first gear crank, is attached to the accommodation part 15. As the first gear 21 rotates, the third gear 161 rotates in a direction orthogonal to the rotation direction of the first gear 21.

The support part 23 includes a cavity having the same shape as a cross-sectional shape of a rod-shaped member. The support part 23 surrounds the outer peripheral surface of the rod-shaped member for coupling the gear crank 17R and the gear crank 17L, between the gear crank 17L serving as the second gear crank and the first gear 21, and supports the rod-shaped member.

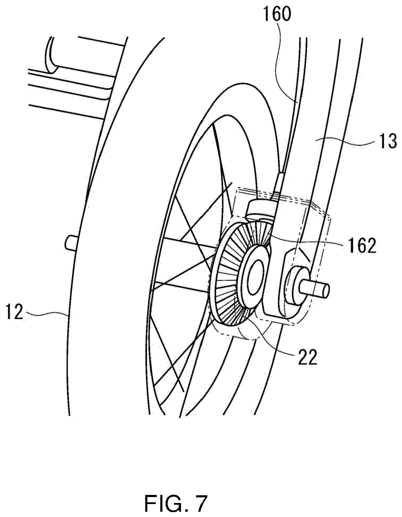

FIG. 7 shows the periphery of the second gear 22 and the fourth gear 162 provided on the rear wheel 12. The rotation of the shaft 16 rotates the fourth gear 162, and the rotation of the second gear 22, in a direction orthogonal to the rotation direction of the fourth gear 162, rotates the rear wheel 12.

### [A structure of the accommodation part 15]

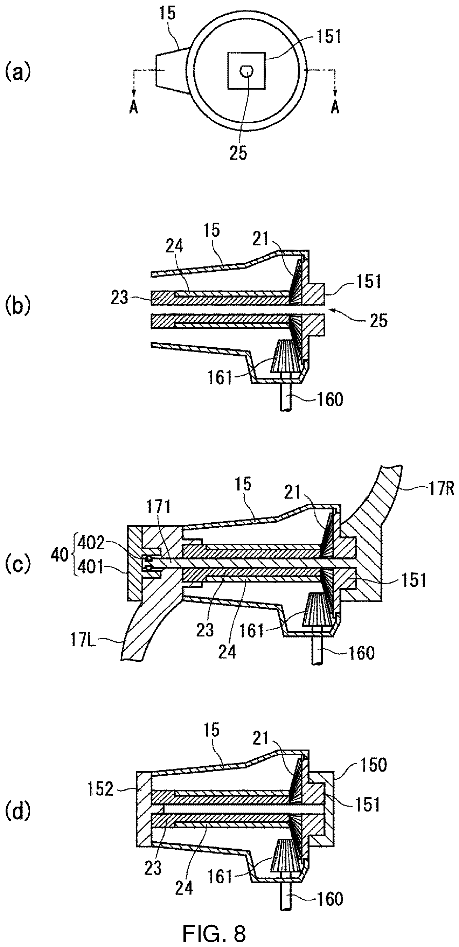

FIG. 8 is a diagram for explaining a structure of the accommodation part 15. FIG. 8(a) is an appearance of the accommodation part 15 viewed from the right side of the bicycle 1 in a state where the gear crank 17R is not coupled to the accommodation part 15. As shown in FIG. 8(a), the coupling part 151, for detachably coupling a gear crank for rotating the first gear 21, is formed in the accommodation part 15. In an example shown in FIG. 8(a), the coupling part 151 is a polygonal convex part and engages with a concave part formed on the gear crank 17R, but the coupling part 151 may be configured to be a polygonal concave part and engage with a convex part formed on the gear crank 17R.

FIG. 8(b) shows an A-A-line cross section of the accommodation part 15. FIG. 8(c) shows the A-A-line cross section in a state where the gear crank 17R and the gear crank 17L are attached to the accommodation part 15. As shown in FIG. 8(b), the accommodation part 15 includes the support part 23 coupled to the first gear 21. Further, the accommodation part 15 includes a cylindrical part 24 having a cylindrical shape for restricting the support part 23 from moving rightward (the coupling part 151 side). The cylindrical part 24 is coupled to the accommodation part 15 at a position not shown in FIG. 8. The accommodation part 15 may function as the cylindrical part 24.

The support part 23 surrounds the outer peripheral surface of the rod-shaped member 171 extending from the gear crank 17R between the gear crank 17L and the first gear 21, and supports the rod-shaped member 171. The cross-sectional shape of tip end of the support part 23 is a polygonal shape (for example, a hexagonal shape) and engages with, for example, a polygonal concave part formed on the gear crank 17L. The support part 23 has a step at a predetermined distance from the tip, and the width of the polygonal region in the A-A-line cross section is larger than the width of the region adjoining the polygonal region.

The outer diameter of the cylindrical part 24 is smaller than the width of the polygonal region, and the inner diameter of the cylindrical part 24 is larger than the width of the region adjoining the polygonal region. Therefore, providing the cylindrical part 24 can prevent the support part 23 from moving rightward together with the first gear 21 and the coupling part 151 and falling out.

The coupling part 151, the first gear 21, and the support part 23 are formed with holes 25, through which the rod-shaped member 171 is made to pass, and engage with the rod-shaped member 171. In the present embodiment, the shape of the hole 25 and the cross-sectional shape of the rod-shaped member 171 are shapes formed by connecting a circular arc and a straight line, and the rotation of the rod-shaped member 171 rotates the first gear 21.

The rotational force applied to the gear crank 17R is transmitted to the first gear 21 via the coupling part 151 and the rod-shaped member 171. The rotational force applied to the gear crank 17L is transmitted to the first gear 21 via the support part 23 and the rod-shaped member 171 engaged to the gear crank 17L.

In order to efficiently transmit the rotational force applied to the gear crank 17R and the gear crank 17L to the first gear 21, the shape of the hole 25 and the cross-sectional shape of the rod-shaped member 171 are preferably something other than circular, but may be circular. If the shape of the hole 25 and the cross-sectional shape of the rod-shaped member 171 are circular, the rotational force applied to the gear crank 17L can be efficiently transmitted to the first gear 21 by, for example, coupling the rod-shaped member 171 and the support part 23 with screws.

The rod-shaped member 171 passes through the holes formed in the coupling part 151, the first gear 21, the support part 23, and the gear crank 17L, and reaches the left side of the bicycle 1 in the gear crank 17L. A groove serving as a coupling mechanism for coupling the regulating member 40 for regulating the position of the gear crank 17L in a left and right direction is formed in the vicinity of the distal end of the rod-shaped member 171 (for example, at a position 5mm from the distal end). The groove serving as the coupling mechanism is coupled on the distal end side from the position where the gear crank 17L is attached to the rod-shaped member 171 on the left side (a second side) of the rod-shaped member 171 opposite to the right side (a first side) on which the gear crank 17R is coupled to the coupling part, out of the right side and the left side of the bicycle 1. The regulating member 40 has a body part 401 formed of a resin, and a metallic deformation part 402 fixed to the groove formed on the rod-shaped member 171.

FIG. 8(d) shows a state where a cover 150 and a cover 152 are attached to the accommodation part 15. The cover 150 is a member having a concave portion with the same shape as the shape of the coupling part 151, and can cover the coupling part 151 by engaging the concave portion with the coupling part 151. Further, the cover 152, on the side opposite to the coupling part 151 in the accommodation part 15, has a convex portion having the same shape as the shape of the hole formed in the support part 23. The cover 152 can cover the support part 23 by engaging the convex portion of the cover 152 with the hole formed on the support part 23.

In this manner, since the cover 150 and the cover 152 cover the right and left sides of the accommodation part 15 in a state where the gear crank 17L and the gear crank 17R are detached, it is possible to prevent the user from touching the movable part in the accommodation part 15. Therefore, safety when using the bicycle 1 is improved, which is suitable for a bicycle for a child.

### [A structure for fixing the gear crank 17 with the regulating member 40]

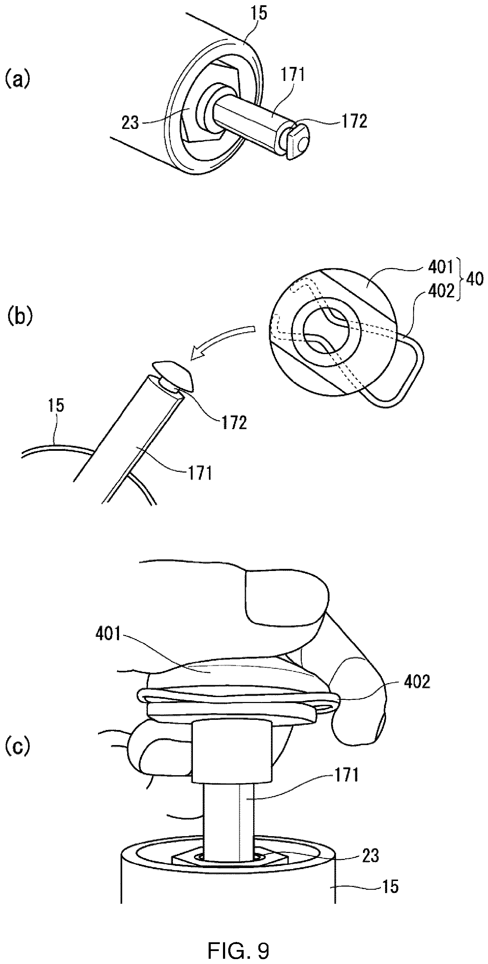

FIG. 9 is a diagram for explaining a structure for fixing the gear crank 17 with the regulating member 40. As shown in FIG. 9(a), a groove 172 for fixing the regulating member 40 is formed in the vicinity of the tip end of the rod-shaped member 171.

FIG. 9(b) shows the regulating member 40 viewed from the side to be connected to the rod-shaped member 171. The body part 401 is formed with a concave portion that engages with the distal end of the rod-shaped member 171. The deformation part 402 is formed of two metal wires on the left and right connected to each other. The deformation part 402 has a region having a first width and a region having a second width larger than the first width between two metal wires. The first width is smaller than the outer diameter of the rod-shaped member 171, and the second width is larger than the outer diameter of the rod-shaped member 171.

In a steady state, the first-width region of the deformation part 402 is located inside the concave portion of the body part 401, and the deformation part 402 in this state engages with the groove 172, whereby the regulating member 40 can regulate the displacement of the gear crank 17L in the left and right direction.

FIG. 9(c) is a diagram for explaining a method in which the user attaches and detaches the regulating member 40 to and from the rod-shaped member 171. In FIG. 9(c), the gear crank 17L is not shown in order to make the structure easier to understand.

When the user detaches the regulating member 40 from the rod-shaped member 171 or attaches the regulating member 40 to the rod-shaped member 171, the user pushes one end of the regulating member 40 closer to the body part 401, thereby moving the deformation part 402 so that the second-width region of the deformation part 402 is located inside the concave portion of the body part 401. Since the second width is larger than the outer diameter of the rod-shaped member 171, the user can freely attach and detach the regulating member 40 from the rod-shaped member 171 while the second width of the deformation part 402 is located inside the concave portion of the body part 401.

### [A method for attaching and detaching the gear crank 17]

Next, a method for assembling the bicycle 1 in a state shown in FIG. 2 by attaching the gear crank 17 and the pedal 18 to the bicycle 1 in the state shown in FIG. 1 will be described. First, the user detaches the cover 150 and the cover 152 attached to the accommodation part 15. The user can easily detach the cover 150 and the cover 152 by pulling the cover 150 and the cover 152.

In a state where the cover 150 and the cover 152 are detached (the state shown in FIGS. 8(a) and 8(b)), the user inserts the rod-shaped member 171, extending from the gear crank 17R with the pedal 18R attached, into the hole 25 formed in the accommodation part 15, and the tip of the rod-shaped member 171 reaches the opposite side of the coupling part 151 in the accommodation part 15, thereby coupling the gear crank 17R to the coupling part 151.

In this state, the user inserts the body part 401 into the rod-shaped member 171 to attach the body part 401 to the rod-shaped member 171. Subsequently, the user attaches the distal end side of the rod-shaped member 171, which is from the position where the gear crank 17L is attached to the rod-shaped member 171 to the distal end, into the concave portion of the regulating member 40 in a state after the user has pushed the deformation part 402 to make the second-width region of the deformation part 402 positioned at the concave portion of the body part 401. By releasing the hand pushing the deformation part 402 after inserting the rod-shaped member 171 into the concave portion of the regulating member 40, the first region of the deformation part 402 is engaged with the groove 172 formed on the rod-shaped member 171, and the regulating member 40 is coupled to the rod-shaped member 171, whereby the bicycle 1 in the state shown in FIG. 2 can be assembled.

When the user wants to return from the state shown in FIG. 2 to the state shown in FIG. 1, the user pushes the deformation part 402 to detach the regulating member 40 from the rod-shaped member 171 in a state where the second-width region of the deformation part 402 is positioned at the concave portion of the body part 401. Subsequently, the gear crank 17L is pulled out from the rod-shaped member 171. Further, the rod-shaped member 171 is pulled out from the hole 25 formed in the accommodation part 15. Finally, the cover 150 is attached so as to cover the coupling part 151, and the cover 152 is attached so as to cover the cavity of the accommodation part 15 on the side opposite to the coupling part 151.

In the above description, the configuration in which the rod-shaped member 171 extends from the gear crank 17R is exemplified, but the rod-shaped member 171 may extend from the gear crank 17L. In addition, all of the configurations may be provided at positions realized by switching the left and right sides.

### [Variation]

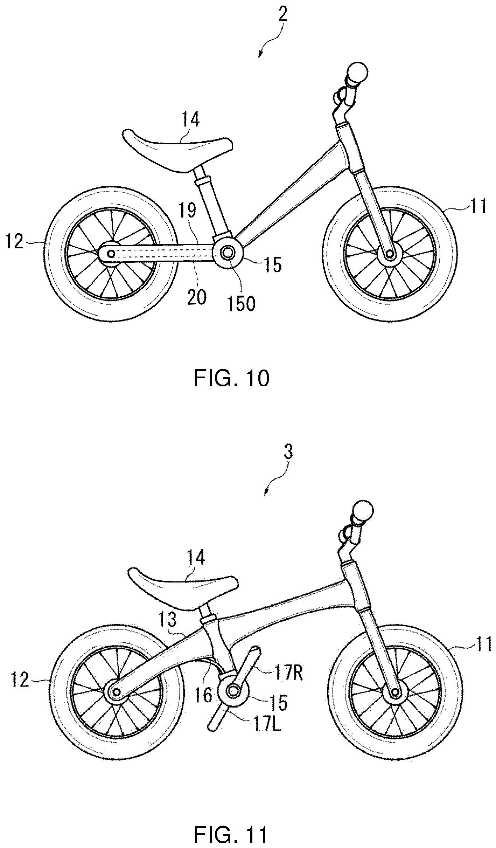

FIG. 10 shows a bicycle 2 of a variation of the first embodiment. The bicycle 2 shown in FIG. 10 differs from the bicycle 1 shown in FIG. 1 in that, instead of the frame 13 shown in FIG. 1, the bicycle 2 has a frame 19 extending in a direction substantially horizontal to the ground between the accommodation 15 and the rear wheel 12. It also differs from the bicycle 1 in that it has a substantially straight shaft 20 instead of the shaft 16 shown in FIG. 1. In the configuration of the bicycle 2, the shaft 20 does not have to be flexible.

### [Effects of the bicycle 1 of the first embodiment]

As described above, in the bicycle 1, the first gear 21 and the second gear 22 provided on the front wheel 11 and the rear wheel 12 are connected by the shaft 16. The bicycle 1 includes the coupling part 151 that detachably couples the gear crank 17R for rotating the first gear 21 and transmitting the driving force of the gear crank 17 to the first gear 21.

When the user pedals the pedal 18 attached to the gear crank 17, the shaft 16 rotates, and the rear wheel 12 rotates with the rotation of the shaft 16. Since the bicycle 1 has such a configuration that the gear crank 17 can be easily attached and detached, the user can use the bicycle 1 without the gear crank 17 shown in FIG. 1 when he/she wants to develop a sense of balance, and can use the bicycle 1 with the gear crank 17 shown in FIG. 2 when he/she wants to practice pedaling the bicycle 1 with the pedal 18.

Since the bicycle 1 transmits the driving force of the gear crank 17 to the rear wheel 12 by the shaft 16 as described above, the user can easily switch between the state shown in FIG. 1 and the state shown in FIG. 2 simply by attaching and detaching the gear crank 17. In addition, the shaft 16 has flexibility, and is provided in a curved shape so that most of the region is hidden by the frame 13. Therefore, it is difficult for the user to touch the shaft 16, which can ensure high safety.

### <The Second Embodiment

FIG. 11 is an appearance of a bicycle 3 according to the second embodiment. The bicycle 3 is different from the bicycle 1 according to the first embodiment shown in FIG. 1 in that the gear crank 17 (17L, 17R) is attached but the pedal 18 (a pedal 18L, a pedal 18R) is not attached, and is otherwise the same.

A hole for inserting a rotation shaft of the pedal 18 is formed in the gear crank 17. The rotation shaft of the pedal 18 has, for example, a cylindrical shape, and a circular groove similar to the groove formed at the tip of the rod-shaped member 171 is formed at a position about 1 cm from the tip of the rotation shaft. The user can easily couple the pedal 18 in a rotatable manner to the gear crank 17 by inserting the rotation shaft of the pedal 18 into the hole formed in the gear crank 17 and fixing a member having a shape equivalent to the regulating member 40 described with reference to FIG. 9 to the rotation shaft in this state.

In this manner, since the pedal 18 is configured to be detachable, the bicycle 3 can be easily switched between a state where the pedal 18 is not attached as shown in FIG. 11 and a state where the pedal 18 is attached as the bicycle 1 shown in FIG. 1. Therefore, the user can use the bicycle 3 in the state shown in FIG. 11 when he/she wants to develop the sense of balance, and can use the bicycle 3 in the state shown in FIG. 1 when he/she wants to practice pedaling the bicycle 3 using the pedal 18.

### <The Third Embodiment>

The bicycle 1 and the bicycle 2 according to the first embodiment have configurations in which the gear crank 17 is detachable, and the bicycle 3 according to the second embodiment has a configuration in which the pedal 18 is detachable. On the other hand, a bicycle 4 according to the third embodiment differs from the bicycles 1-3 in that the accommodation part 15 and the shaft 16 are detachable as well as the gear crank 17, and is the same in other respects. In the bicycle 4, the accommodation part 15 and the shaft 16 are separated from the body of the bicycle 4 by separating the first gear 21 from the body (for example, the frame 13) of the bicycle 4 and separating the second gear 22 from the rear wheel 12.

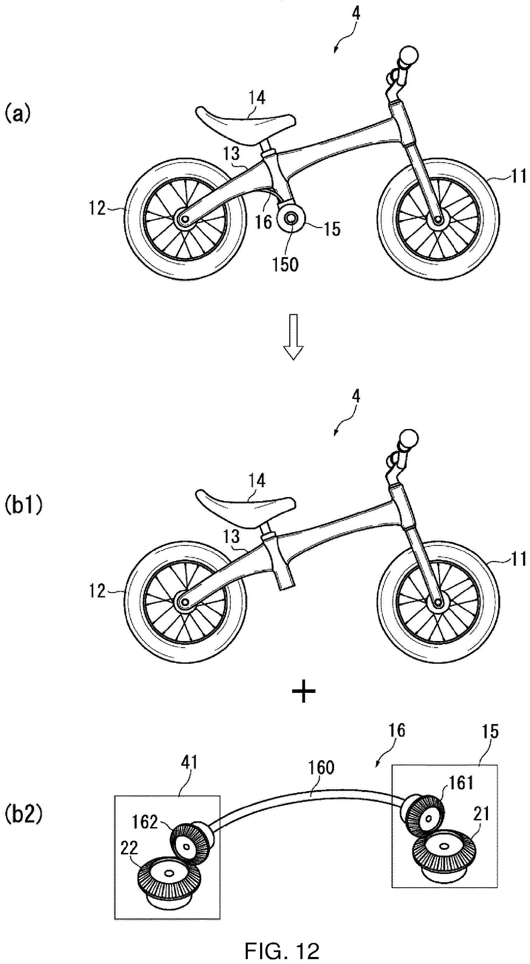

FIG. 12 is a diagram for explaining an outline of the bicycle 4 according to the third embodiment. FIG. 12(a) shows the bicycle 4 in a state equivalent to the bicycle 1 shown in FIG. 1, and in this state, the bicycle 4 is in a state where the accommodation part 15 and the shaft 16 are attached. FIGS. 12(b1) and 12(b2) schematically show a state where the accommodation part 15 and the shaft 16 are detached from the body of the bicycle 4.

As shown in FIG. 12(b2), the fourth gear 162 connected to the shaft 16 on the side opposite to the side of the accommodation part 15 and the second gear 22 meshed with the fourth gear 162 are also detached. The fourth gear 162 and the second gear 22 are accommodated in an accommodation part 41, and the user can easily change the bicycle 4 to a state where the gear crank 17 and the shaft 16 are not attached by detaching the accommodation part 15, the shaft 16, and the accommodation part 41.

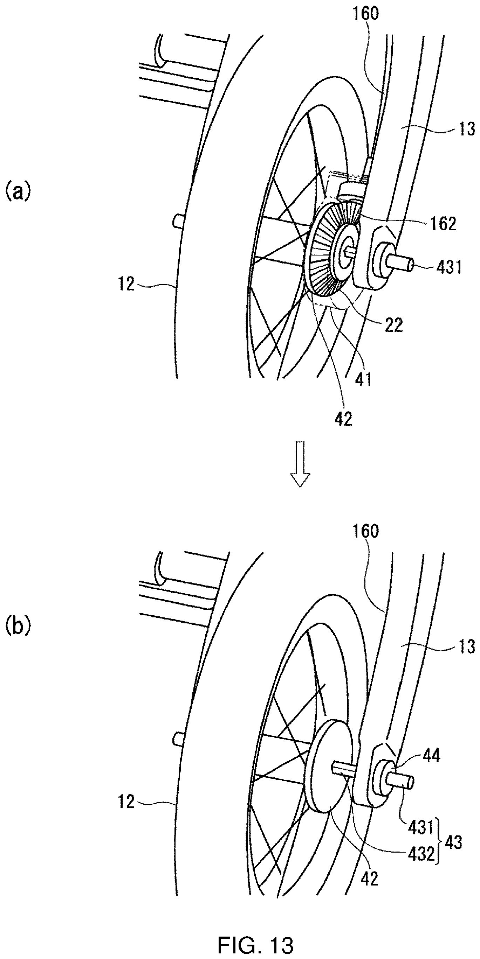

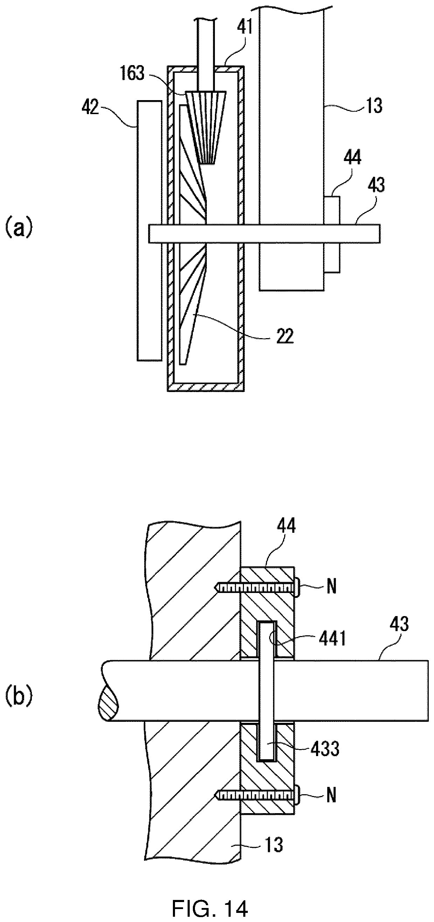

FIG. 13 shows the vicinity of the rotary shaft of the rear wheel 12. FIG. 14 is a cross-sectional view of the vicinity of the rotary shaft of the rear wheel 12 viewed from the rear side of the bicycle 4. FIG. 14(b) is an enlarged view of the periphery of a regulating member 44 in FIG. 14(a).

FIG. 13(a) shows a state where the accommodation part 41 is attached to the rear wheel 12, and FIG. 13(b) shows a state where the accommodation part 41 is detached from the rear wheel 12. As shown in FIG. 13, the rear wheel 12 is provided with a disk-shaped fixing part 42. A concave portion 421, into which an end portion of a coupling member 43 is inserted, is formed on the fixing part 42. The fixing part 42 fixes the coupling member 43 to the rear wheel 12 with the coupling member 43 inserted into the concave portion 421.

The coupling member 43 includes an outer coupling part 431 on the side opposite to the fixing part 42 with respect to the frame 13 (that is, on the outer side) and an inner coupling part 432 on the side closer to the fixing part 42 than to the frame 13. The boundary position between the outer coupling part 431 and the inner coupling part 432 may be any position between the regulating member 44 and the fixing part 42, but is, for example, inside the frame 13.

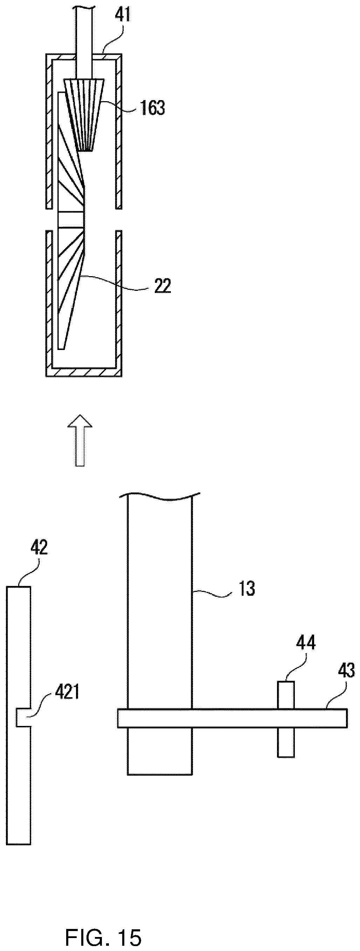

The cross section of the outer coupling part 431 is circular. The outer coupling part 431 has a substantially cylindrical shape, and a circular convex portion 433 that engages with the regulating member 44 is formed. The cross section of the inner coupling part 432 is, for example, a polygon, and the inner coupling part 432 is, for example, a rectangular parallelepiped. Since the cross section of the inner coupling part 432 is polygonal, the fixing part 42 rotates as the coupling member 43 rotates while the inner coupling part 432 is inserted into the concave portion 421 shown in FIG. 15. Therefore, when the user pedals the pedal 18, the fourth gear 162, the second gear 22, and the coupling member 43 are rotated, and the rear wheel 12 is also rotated together with the fixing part 42, to which the coupling member 43 is fixed.

As shown in FIG. 14, on the outer side of the frame 13 (that is, on the side opposite to the side of the fixing part 42), there is provided the regulating member 44 for regulating the amount by which the coupling member 43 moves in the left and right direction of the bicycle 4 in a state where the coupling member 43 is rotatable. The regulating member 44 is fixed to the frame 13 by, for example, screws N shown in FIG. 14(b). The regulating member 44 has a doughnut shape with a hole in the center, and the coupling member 43 is inserted into the hole in the center. A circular concave portion 441 is formed on the inner surface of the hole, and the convex portion 433 formed on the coupling member 43 is accommodated in the concave portion 441, so that the amount that the coupling member 43 moves in the left and right direction of the bicycle 4 is regulated while the coupling member 43 rotates. The regulating member 44 may have a bearing in contact with the convex portion 433 of the coupling member 43 to facilitate the rotation of the coupling member 43.

With the above configuration, in the bicycle 4, the second gear 22 is fixed to the rear wheel 12 in a state where the coupling member 43 penetrates through the second gear 22 and the tip end of the coupling member 43 is fixed to the rear wheel 12. In addition, the second gear 22 is separated from the rear wheel 12 in a state where the coupling member 43 does not penetrate through the second gear 22.

FIG. 15 is a diagram for explaining a method for detaching the accommodation part 41. The user first detaches the screws N connecting the regulating member 44 to the frame 13 to detach the accommodation part 41. Subsequently, the user pulls out the regulating member 44 and the coupling member 43 in the direction away from the rear wheel 12 while his/her one hand supports the accommodation part 41. In this manner, the user can easily detach the accommodation part 41. Thereafter, the user inserts the coupling member 43 into a hole formed in the frame 13 until the regulating member 44 comes into close contact with the frame 13, and fixes the regulating member 44 to the frame 13 with the screws N.

Further, the user detaches the accommodation part 15 from the frame 13 by detaching a coupling member (for example, screws (not shown)) that couples the accommodation part 15 and the frame 13. According to the above procedure, the user can easily separate the body of the bicycle 4 from the accommodation part 15, the shaft body 160, and the accommodation part 41, as shown in FIGS. 12(b1) and 12(b2).

The present invention is explained on the basis of the exemplary embodiments. The technical scope of the present invention is not limited to the scope explained in the above embodiments and it is possible to make various changes and modifications within the scope of the invention. For example, the specific embodiments of the distribution and integration of the apparatus are not limited to the above embodiments, all or part thereof, can be configured with any unit which is functionally or physically dispersed or integrated. Further, new exemplary embodiments generated by arbitrary combinations of them are included in the exemplary embodiments of the present invention. Further, effects of the new exemplary embodiments brought by the combinations also have the effects of the original exemplary embodiments.

For example, in the above description, a case where the gear crank 17R is the first gear crank and the gear crank 17L is the second gear crank is illustrated, but the gear crank 17R may be the second gear crank and the gear crank 17L may be the first gear crank.

### [Description of the reference numerals]

- 1, 2, 3, 4: bicycle
- 11: front wheel
- 12: rear wheel
- 13: frame
- 14: saddle
- 15: accommodation part
- 16: shaft
- 17: gear crank
- 18: pedal
- 19: frame
- 20: shaft
- 21: first gear
- 22: second gear
- 23: support part
- 24: cylindrical part
- 25: hole
- 150: cover
- 151: coupling part
- 152: cover
- 160: shaft body
- 161: third gear
- 162: fourth gear
- 171: rod-shaped member
- 172: groove
- 40: regulating member
- 41: accommodation part
- 42: fixing part
- 43: coupling member
- 44: regulating member
- 401: body part
- 402: deformation part
- 421: concave portion
- 431: outer coupling part
- 432: inner coupling part
- 433: convex portion
- 441: concave portion

## Claims

1. A bicycle having a front wheel and a rear wheel, the bicycle comprising:
a first gear provided between the front wheel and the rear wheel;
a second gear provided on the rear wheel;
a shaft having a third gear meshing with the first gear and a fourth gear meshing with the second gear; and
a coupling part for detachably coupling a gear crank for rotating the first gear and transmitting a driving force of the gear crank to the first gear.

2. The bicycle according to claim 1, wherein
the coupling part has at least one of a convex portion that engages with a concave portion formed on the gear crank and a concave portion that engages with a convex portion formed on the gear crank.

3. The bicycle according to claim 1 or 2, wherein
the coupling part and the first gear have holes through which a rod-shaped member extends from the gear crank.

4. The bicycle according to claim 3, wherein
a coupling mechanism for coupling a regulating member for regulating the position of a second gear crank in a left and right direction is formed on a distal end side from the position where the second gear crank is attached to the rod-shaped member on a second side of the rod-shaped member opposite to a first side, on which a first gear crank is coupled to the coupling part, out of the right side and the left side of the bicycle.

5. The bicycle according to claim 4 further comprising:
a support part that surrounds an outer peripheral surface of the rod-shaped member between the second gear crank and the first gear, and supports the rod-shaped member.

6. The bicycle according to any one of claims 1 to 5, wherein
the coupling part detachably fixes a cover that covers the coupling part in a state where the gear crank is not coupled.

7. The bicycle according to any one of claims 1 to 6, wherein
the shaft is formed of a flexible member extending from the position of the third gear to the position of the fourth gear.

8. The bicycle according to claim 7, wherein
the shaft has a plurality of integral linear members.

9. The bicycle according to claim 7 or 8 further comprising:
a frame provided between the front wheel and the rear wheel, wherein the shaft has a region extending along the frame.

10. The bicycle according to claim 9, wherein
the shaft has a region extending along a curved portion of the frame.

11. A bicycle having a front wheel and a rear wheel, the bicycle comprising:
a first gear provided between the front wheel and the rear wheel;
a second gear provided on the rear wheel;
a shaft having a third gear meshing with the first gear and a fourth gear meshing with the second gear;
a gear crank for rotating the first gear; and
a pedal detachably coupled to the gear crank.

12. The bicycle according to any one of claims 1 to 11, wherein
the first gear is detachably fixed to the body of the bicycle,
the second gear is detachably fixed to the rear wheel,
the shaft is separated from the body by separating the first gear from the body and separating the second gear from the rear wheel.

13. The bicycle according to claim 12 further comprising:
a coupling member that couples the rear wheel and the second gear, wherein
the second gear is fixed to the rear wheel with the coupling member when the coupling member penetrates through the second gear and the tip of the coupling member contacts the rear wheel, and
the second gear is separated from the rear wheel when the coupling member does not penetrate through the second gear.

14. A production method for a bicycle, the method comprising the steps of:
preparing a bicycle according to any one of claims 1 to 13;
preparing a first gear crank and a second gear crank;
coupling the first gear crank to a coupling part by inserting a rod-shaped member extending from the first gear crank into a hole formed in the coupling part;
attaching the second gear crank to the distal end side of the rod-shaped member; and
coupling a regulating member for regulating the position of the second gear crank in a left and right direction to the distal end side, which is from the position where the second gear crank is attached to the rod-shaped member to the distal end.
